# EUROPEAN PATENT SPECIFICATION

(11) **EP 2 428 597 B1**
(45) Date of publication and mention of the grant of the patent: **24.06.2015**
(21) Application number: 11460010.9
(22) Date of filing: 04.03.2011
(51) Int. Cl.: D01F 6/46, D01F 6/50, D01F 6/90, D01F 6/92

(54) **All-polymer fibrillar nanocomposites and method for manufacture thereof**
Fibrilläre Vollpolymer-Nanoverbundstoffe und Herstellungsverfahren dafür
Nanocomposites fibrillaires entièrement polymères et leur procédé de fabrication

(30) Priority: 04.03.2010 PL 39060710
(43) Date of publication of application: 14.03.2012
(73) Proprietor: Centrum Badan Molekularnych I Makromolekularnych Polskiej Akademii Nauk, 90-363 Lodz (PL)
(72) Inventor: Jurczuk, Kinga, 22-200 Wlodawa (PL); Galeski, Andrzej, 94-123 Lodz (PL); Piorkowska-Galeska, Ewa, 94-123 Lodz (PL)
(74) Representative: Brodowska, Iwona

(56) References cited:
- US-A- 5 645 603
- US-A- 6 162 851
- BERNLAND K ET AL: "Nucleating polymer crystallization with poly(tetrafluoroethylene) nanofibrils", JOURNAL OF APPLIED POLYMER SCIENCE 2009, vol. 114, no. 1, 2009, pages 281-287, XP002666484, JOHN WILEY AND SONS INC. USA DOI: 10.1002/APP.30425

## Description

The invention concerns nanocomposites of thermoplastic polymers containing nanofibers of poly(tetrafluoroethylene) and a method of manufacture thereof by means of modification of properties of thermoplastic polymers or compositions containing thermoplastic polymers. The term "thermoplastic polymers" concerns polymeric materials which soften upon heating, whereas solidify upon subsequent cooling. Polymeric thermoplastic resins are used for manufacture of a broad range of various products.

Properties of thermoplastic polymers can be modified by means of filling. Properties of filled polymers depend on a content and a type of filler used, and also on shapes of filler grains and mutual interactions between a filler and a polymer matrix. Fillers can be classified as powders, composed of spherical or flaky grains, or short cut fibers, and as continuous unidirectional fillers, called also fibers. A content of powders or continuous fillers in thermoplastic polymers or thermoplastic composites ranges from 5 to 60 vol. %.

Commonly used fillers comprise various chemical compounds (talc, chalk, volcanic minerals, metal powders and others [R.N.Rothon, Mineral Fillers In Thermoplastics: Filler Manufacture and Characterisation, Adv. Polym. Sci., 139, 67-107 (1999)]), carbon fibers, glass fibers or polymeric fibers (PP, PE, PA, PET, PBT) and also natural fillers (cellulose, wood flour etc. ) [C.Klason, J.Kubat, H.-E.Strömvall, The Efficiency of Cellulosic Fillers In Common Thermoplastics Part 1. Filling without Processing Aids or Coupling Agents, Int. J. Polym.Mater., 10, 159-187 (1984)]. Filler particles having low aspect ratio (spheres or granules) can increase modulus of elasticity but do not increase strength. Particles in the form of fibers or plates, with large surface area, cause simultaneous increase of stiffness and strength. Moreover, polymers are also modified by means of agents nucleating crystallization.

In general, a presence of nucleating agent accelerates crystallization, simultaneously increasing crystallization temperature, which enables to shorten manufacture of a product. Numerous agents nucleating crystallization of thermoplastic polymers are known. Patent application No. P-383599 (24.10.2007) discloses nucleation of several polymers by means of poly(tetrafluoroethylene) particles. It is also known that crystallization of isotactic polypropylene is nucleated by poly(tetrafluoroethylene) fibers [C.Wang, L.M.Hwang, Transcrystallization of PTFE Fiber/PP Composites (I) Crystallization Kinetics and Morphology, J Polym. Sci. Part B: Polym Phys. 34, 47-56, (1996), C.Wang C., C.R.Liu, Transcrystallization of polypropylene composites: nucleating ability of fibers, Polymer 40, 289-298 (1999)]. Moreover, it was demonstrated that contact of isotactic polypropylene with a layer of poly(tetrafluoroethylene) results in the growth of transcrystalline layers near the interface [D.R.Fitchmun, S.Newman, Surface Crystallization of Polypropylene, J. Polym. Sci. Part A-2, 8, 1545-1564 (1970), K.Gadzinowska, E.Piorkowska, Influence of sample thickness and surface nucleation on iPP crystallization kinetics in DSC measurements, Polimery, 48, 790-799 (2003)].

There are known methods for manufacture of poly(tetrafluoroethylene) fibers in fluidized bed [US Patent No. 6187238], by extrusion of a mixture of aqueous dispersion of poly(tetrafluoroethylene) powder and solution of cellulose ether, sintering, drawing and annealing [US Patent No. 7498079] or by extrusion of a paste containing poly(tetrafluoroethylene) powder and a substance facilitating extrusion, annealing and drawing [US Patent No. 5686033].

US Patent No. 5418270 discloses compositions of thermoplastic elastomers, modified with fibrillated poly(tetrafluoroethylene) and molybdenum disulfide (MoS₂), where a poly(tetrafluoroethylene) content ranges from 2 to 12 wt.% and a ratio of fibrillated poly(tetrafluoroethylene) to molybdenum disulfide is in a range of about 3 to 1 to about 6 to 1 by weight. Moreover, it is advantageous to mix particles of molybdenum disulfide with particles of poly(tetrafluoroethylene) prior to adding them to the elastomer in order to cause association of the particles by electrostatic interactions. The presence of molybdenum disulfide also facilitates uniform dispersion of fibers.

US Patent No. 5645603 discloses modification of thermoplastic polymers by addition of thermoplastic elastomer containing fibrillated poly(tetrafluoroethylene) and molybdenum disulfide.

Moreover, it was observed [D.W. van der Meer, D.Milazzo, A.Sanguinetti, G.J.Vansco, Oriented Crystallization and Mechanical Properties of Polypropylene Nucleated on Fibrillated Polytetrafluoroethylene Scaffolds, Polym.Eng.Sci., 45, 458-468 (2005)], that poly(tetrafluoroethylene) powder, added to isotactic polypropylene, in a content ranging from 1 to 6 wt.% can undergo partial fibrillation during mixing with this polymer. It results in formation of a network of fibers, in the form of bunches and bundles of nano-fibers, with diameters of individual nano-fibers of 20-30 nm and an aspect ratio of 25. Poly(tetrafluoroethylene) in this form nucleates crystallization of isotactic polypropylene, and modification of mechanical properties follows from the nucleation of polypropylene on poly(tetrafluoroethylene). It is also known [K.Bernland, P. Smith, Nucleating Polymer Crystallization with Poly(tetrafluoroethylene) Nanofibrils, J. Appl. Polym. Sci., 114, 281-287 (2009)], that during mixing of polymers, poly(methylene oxide) and polyiamide 12, with 1 wt.% of poly(tetrafluoroethylene) powder and during mixing of isotactic polypropylene and high density polyethylene with 0.001 to 2 wt.% of poly(tetrafluoroethylene) powder part of poly(tetrafluoroethylene) transformed into fibers with diameters below 1 µm, and the fibers nucleated crystallization of the polymers. However, many grains of poly(tetrafluoroethylene) were not transformed into fibrils and remained as particles with sizes reaching 5µm.

A characteristic feature of polymeric nanocomposites is that filler particles are of nanometer sizes. Owing to a large surface area of interactions between filler nano-particles and a polymer a desirable modification of properties can be achieved at low filler loadings, of order of several percents [K. Friedrich, S. Fakirov, Z. Zhang, Polymer Composites. From Nano- to Macro-Scale. Springer, 2005]. To modify polymers layered sillicates are often used, which undergo exfoliation into 1 nm thick platelets during mixing with a polymer. Exfoliation of the platelets and their proper dispersion in a polymer is necessary for improvement of properties. This requires, however, a chemical modification of the filler, use of compatibilizers and proper methods of mixing. Regardless of a type of nano-filler and shapes of its particles, it is necessary to achieve a good dispersion of nano-particles, because presence of agglomerates leads to worsening of mechanical properties. The higher the nanofiller content, the more difficult to achieve is a good dispersion of the nanoparticles.

The all-polymer fibrillar nanocomposites according to the invention contain a thermoplastic polymer selected from a group consisting of polyolefins, polystyrenes, eventually with known additives, and poly(tetrafluoroethylene), the said poly(tetrafluoroethylene) containing more than 50.wt.% of the crystalline phase with melting temperature equal to or higher than 330°C, in the form of individual fibers forming neither bundles nor agglomerates, with transversal sizes in a range from 10 to 500 nanometers, added in a content from 3 to 15 wt.%.

The method for manufacture fibrillar nanocomposites by means of modification of properties of thermoplastic polymers or compositions containing thermoplastic polymers according to the invention comprises addition of poly(tetrafluoroethylene) to a thermoplastic polymer, prior to its processing, the said thermoplastic polymer selected from a group consisting of polyolefins, and polystyrenes, eventually with known additives, the said poly(tetrafluoroethylene) containing more than 50 wt.% of the crystalline phase with melting temperature equal to or higher than 330°C, in the form of particles with sizes preferably in a range from 100 nm to 2mm, added in a content from 3 to 15 wt.%, and the composition obtained in this way is mixed at temperature higher than softening temperature of the thermoplastic polymer, subjecting the composition during mixing to shearing forces, preferably at high shear rates, until transformation of poly(tetrafluoroethylene) into individual fibers forming neither bundles nor agglomerates, after which, eventually, the obtained nanocomposite is processed by extrusion, injection, thermoforming or foaming.

During processing of the composition the particles of poly(tetrafluoroethylene) are subjected to shear forces and undergo transformation into individual fibers with tranverse sizes ranging from 10 to 500 nm, reinforcing the polymer without a melting step. It is important to achieve the transformation of poly(tetrafluoroethylene) into individual fibers dispersed in a polymer matrix. In order to obtain a composite with good properties, mixing of components at high shear rates is required, which allows to reach deformation of poly(tetrafluoroethylene) particles of order 100 to 10 000.

According to the invention, a polymer selected from a group consisting of polyolefins, vinyl polystyrenes, is preferably used as a thermoplastic polymer.

According to the invention, poly(tetrafluoroethylene) powder is preferably added to a thermoplastic polymer or composition containing thermoplastic polymers with known additives, prior to mixing with the additives, during mixing with the additives or after mixing with the additives.

According to the invention, poly(tetrafluoroethylene) powder is preferably initially ground prior to addition to a thermoplastic polymer or a composition containing a thermoplastic polymer.

According to the invention, another thermoplastic polymer is preferably used as an additive.

According to the invention, a chemical compound having low molecular weight is preferably used as an additive, the said chemical compound selected for from a group consisting of pigments, stabilizers, antioxidants and fire retardants.

According to the invention particulate or fibrous filler is preferably used as an additive.

According to the invention poly(tetrafluoroethylene) particles in the form of powder are preferably added to a thermoplastic polymer with known additives.

According to the invention particles of poly(tetrafluoroethylene) are preferably coated with a substance preventing for their agglomeration.

According to the invention a surface of poly(tetrafluoroethylene) particles is preferably chemically modified in the corona discharge to prevent their agglomeration

According to the invention poly(tetrafluoroethylne) particles are preferably used in the form of a dispersion in a liquid.

According to the invention poly(tetrafluoroethylene) particles are used preferably in the form of a dispersion containing surfactant stabilizing the dispersion.

According to the invention mixing is preferably performed by means of a twin screw co-rotating extruder.

According to the invention poly(tetrafluoroethylene) is preferably added to a polymer melt.

According to the invention a nanocomposite - a modified thermoplastic polymer is preferably granulated.

According to the invention, a nanocomposite - a modified thermoplastic polymer or composition containing a thermoplastic polymer is preferably processed by extrusion, injection, thermoforming or foaming.

Unexpectedly, it was found that during processing of compositions of thermoplastic polymers according to the invention, poly(tetrafluoroethylene) particles subjected to shear forces transform without a melting step into practically individual fibers with transverse sizes ranging from 10 to 500 nanometers.

Unexpectedly, it was found that owing to the method of modification of thermoplastic polymers or compositions containing thermoplastic polymers according to the invention, it is possible to obtain poly(tetrafluoroethylene) nanofibers, directly during mixing of poly(tetrafluoroethylene) with a thermoplastic polymer or a composition containing a thermoplastic polymer, without necessity to add an inorganic substance.

An advantage of the method of modification of thermoplastic polymers or compositions containing thermoplastic polymers according to the invention is possibility to manufacture materials with increased strength and exhibiting elevated temperature of crystallization

An advantage of the method according to the invention is nonsolubility of poly(tetrafluoroethylene) in other polymers, hydrofobicity, thermal stability up to 450°C and chemical resistance to reactions with additives used for polymers, which ensures stability of composition during processing and also during using of end product.

The invention will be disclosed based on the following examples:

### Example I.

Polypropylene Novolen 1100H, with density of 0.91g/cm³, melt flow index of 2.4g/10min (2.16kg, 230°C), delivered by BASF, Germany, was used for preparation of composites. Aqueous dispersion of poly(tetrafluoroethylene) particles with sizes 0.05 - 0.5 µm, and poly(tetrafluoroetylene) content of 60 wt. % purchased from Polysciences, Inc., USA, under the trade name Teflon 30B, was also utilized. Moreover, aqueous dispersion of poly(tetrafluoroethylene) particles, under the trade name Dyneon TF 5032R, with average particle size of 160 nm, was also used. Polypropylene was melted in a Brabender mixer. The dispersions of poly(tetrafluoroethylene) particles were added to the molten polymer in the amount appropriate to achieve 5 wt.% content of poly(tetrafluoroethylene) in the composites. Water immediately evaporated. The poly(tetrafuoroethylene) particles were mixed with polypropylene at temperature of 200°C for 15 min. at the rate of 80 rev./min. Neat polypropylene Novolen 1100H was prepared in the same way by mixing in a Brabender mixer for 15 min. at temperature of 200°C, in order to apply the same thermo-mechanical treatment as were the composites with poly(tetrafluoroethylene).

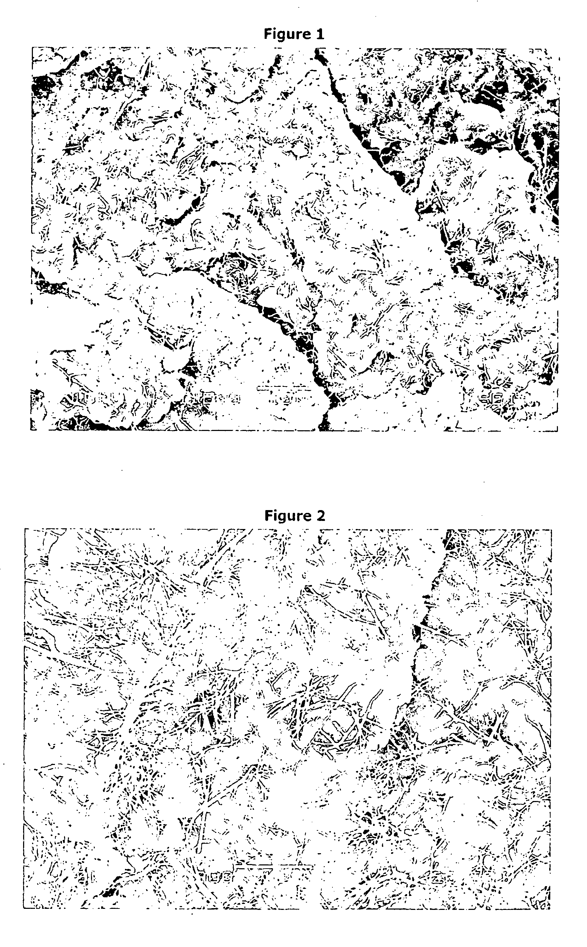

Morphology of the composites was studied by means of scanning electron microscopy (SEM), using a microscope JEOL 5500LV. Fig. 1 shows a microphotograph of fracture surface of a composite.

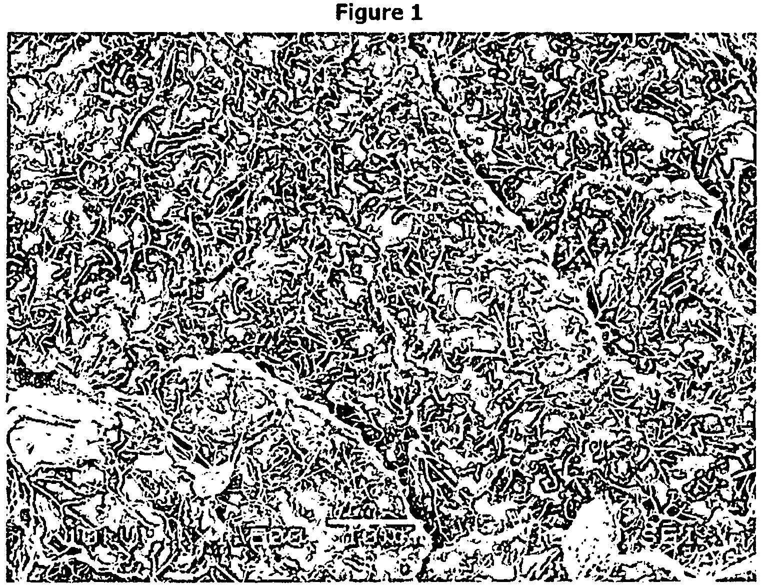

Microphotograph of the composite shows that during mixing of polypropylene with aqueous dispersion of poly(tetrafluoroethylene) with Teflon 30B, nanofibers of poly(tetrafluoroethylene) were obtained, with transverse sizes ranging from 100 to 250 nm.

Studies of the nanocomposites were conducted by means of scanning differential calorimetry (DSC), using a calorimeter TA Instruments 2920. 10 mg specimens were heated to temperature of 220°C, annealed at this temperature for 3 min, and subsequently cooled at a constant rate of 10°C/min to room temperature. Temperatures of crystallization peaks (T_{c}) are collected in Table 1.

**Table 1**

| Material | T_{c} (°C) |
|---|---|
| neat polypropyleene PP | 117.6 |
| Composite of PP with Teflon 30B | 128.3 |
| Composite of PP with TF 5032R | 127.3 |

Comparison of crystallization temperatures shows that presence of poly(tetrafluoroethylene) nanofibers increases crystallization temperature of the materials during cooling.

### Example II.

For production of a composite polypropylene Malen-P B200 having density 0.91g/cm³, melt flow index 0.6g/10min (2.16kg, 230°C), by Basell Orlen Polyolefins Sp. z o.o. Plock, Poland, was used. Also a poly(tetrafluoroethylene) powder Teflon PTFE 7C by DuPont, USA, having average particle size 28µm was used. Polypropylene was melted in a Brabender mixer. Poly(tetrafluoroethylene) powder was finely ground in a homogenizer at liquid nitrogen temperature and then added to molten polypropylene in the amount sufficient to assure 5 wt% of poly(tetrafluoroethylene) in a composite. Poly(tetrafluoroethylene) particles were blended with polypropylene at temperature 200°C for 15 min. at the rate of 120 rev./min. Plain polypropylene Malen-P B200 was also subjected to the same treatment in Brabender mixer for 15 min. at temperature 200°C, in order to obtain polypropylene sample with similar thermal history as polypropylene/ poly(tetrafluoroethylene) composite.

Structure of composite of Malen-P B200 with poly(tetrafluoroethylene) powder Teflon PTFE 7C was studied by means of scanning electron microscopy (SEM) using JEOL 5500LV microscope. SEM micrograph of fracture surface of composite is presented in Figure 2. SEM micrograph of composition illustrates that during mixing of polypropylene with poly(tetrafluoroethylene) powder long nanofibers of poly(tetrafluoroethylene) were formed having thickness from 30 to 150 nm.

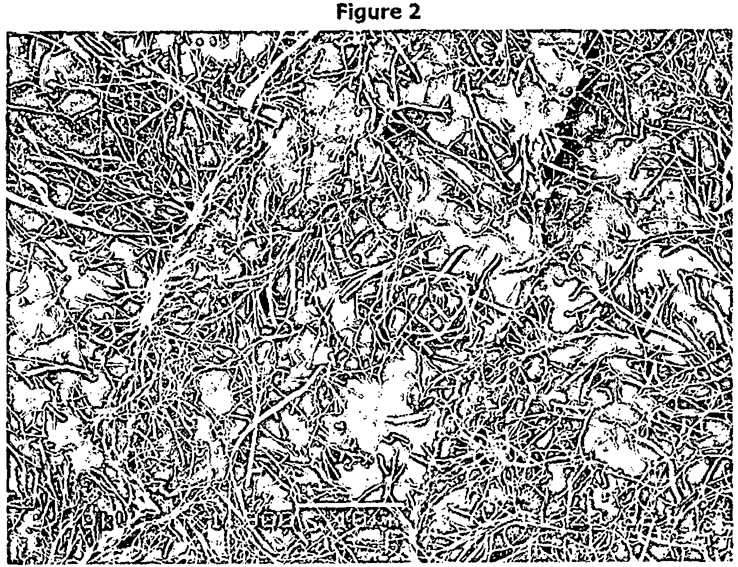

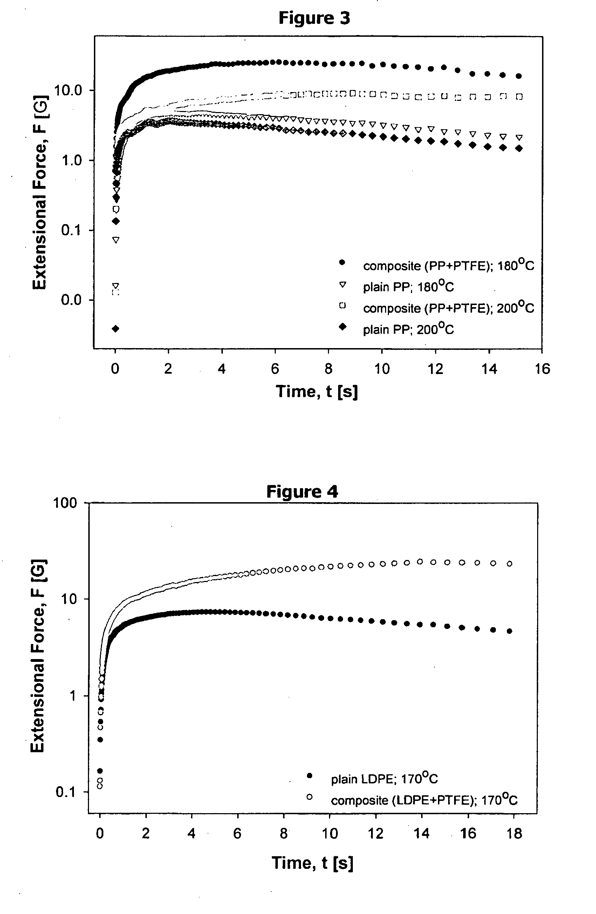

Melt strength measurements of the composition of Malen-P B200 with Teflon PTFE 7C was performed by means of uniaxial stretching in ARES 2KFRTN1 rheometer with Elongation Viscosity Fixture. Uniaxial stretching was made at the temperature 180 and 200°C with drawing rate 0.1 s⁻¹. Plots of force against time were collected in Figure 3.

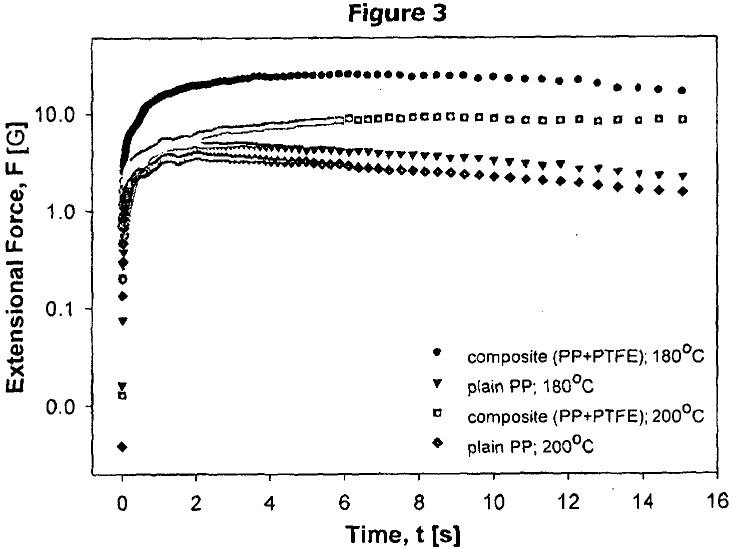

The results of melt strength measurements demonstrate that the presence of nanofibers of poly(tetrafluoroethylene) causes a significant increase of the stretching force as compared to plain polypropylene. The stretching force is a measure of melt strength. At the temperature 180°C the melt strength for composition of Malen-P B200 with Teflon PTFE 7C increased six-folds (F = 26.3 g) in comparison with plain polypropylene (F = 4.4 g).

Impact strength of composite Malen B200 with Teflon 7C PTFE was measured according to notched Izod standard using instrumented hammer of 5.5 J energy (Resil 5.5, CEAST S.p.A., Pianezza TO, Italy).

Impact strength of plain polypropylene and composite Malen-P B200 with Teflon PTFE 7C was 3.9 kJ/m² and 4.8 kJ/m², respectively. It is evident that compounding of poly(tetrafluoroethylene) powder with polypropylene increases the impact strength by 20% as compared to plain polypropylene.

### Example III.

For preparation of composites polypropylene Malen-P B200 and powder Teflon PTFE 7C as described in Example II were used, as well as another PTFE powder produced by Kirowo-Chepieck, Russia, trade name Fluoroplast-4 RB (Reactor Bead). Compositions were prepared in a way descibed in Example II. Investigation of crystallization was performed by means of differencial scanning calorimetry (DSC) using TA Instruments 2920 calorimeter. Samples, 10 mg in weight, were heated to 220°C, annealed at that temperature for 3 min and then cooled down with the constant rate 10°C/min to room temperature. Peak temperatures of crystallization exotherms of the composites studied are collected in Table 2.

**Table 2.**

| Material | T_{c}(°C) |
|---|---|
| plain polypropylene PP | 116.6 |
| composite PP with PTFE 7C | 127.8 |
| composite PP with PTFE F4-RB | 128.0 |

The results indicate that the crystallization of composites with poly(tetrafluoroethylene) occurs at significantly higher temperature than of plain polypropylene during cooling.

### Example IV.

Low density polyethylene Lupolen 1810D, by Lyondell Basell, the Netherlands, density 0.92g/cm³, melt flow index in the range 0.1-0.3g/10min (2.16kg, 230°C) was use for preparation of a composite. Poly(tetrafluoroethylene) Teflon PTFE 7C described in Example II was also used. Low density polyethylene was melted in Brabender mixer. Poly(tetrafluoroethylene) powder was finely ground in a homogenizer at liquid nitrogen temperature and then added to molten polyethylene in the amount sufficient to assure 3 wt% of poly(tetrafluoroethylene) in a composite. Particles of poly(tetrafluoroethylene) were mixed with molten low density polyethylene at the temperature 170°C during 15 min at the rate of 120 rev./min. Plain low density polyethylene Lupolen 1810D was also subjected to mixing in Brabender mixer during 15 min. at the temperature 170°C, in order to to obtain polyethylene sample with similar thermal history as polyethylene/ poly(tetrafluoroethylene) composite.

Melt strength of composite was measured by uniaxial stretching using rheometer ARES 2KFRTN1 with Elongational Viscosity Fixture. Uniaxial stretching was performed at the temperature 170°C with deformation rate 0.1 s⁻¹. Plots of stretching force against time are presented in Figure 4.

The results indicate that the presence of nanofibers of poly(tetrafluoroethylene) increases three-folds the strength of composite as compared to plain low density polyethylene.

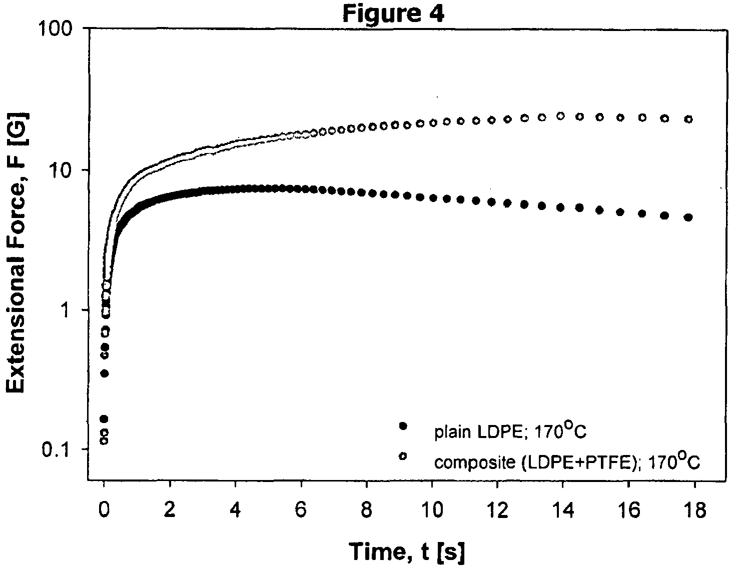

### Example V.

Atactic polystyrene having the weight average molecular weight M_{w}=220 000g/mol was used for preparation of a composite. Poly(tetrafluoroethylene) Teflon PTFE 7C described in Example II was also used. Atactic polystyrene was heated up in Brabender mixer. Poly(tetrafluoroethylene) powder was finely ground in a homogenizer at liquid nitrogen temperature and then added to polystyrene melt in the amount sufficient to assure 3 wt% of poly(tetrafluoroethylene) in a composite. Particles of poly(tetrafluoroethylene) were mixed with molten atacic polystyrene at the temperature 170°C during 15 min at the rate of 120 rev./min. Plain atactic polystyrene was also subjected to mixing in Brabender mixer during 15 min at the temperature 170°C, in order to te obtain polystyrene sample with similar thermal history as polystyrene/ poly(tetrafluoroethylene) composite.

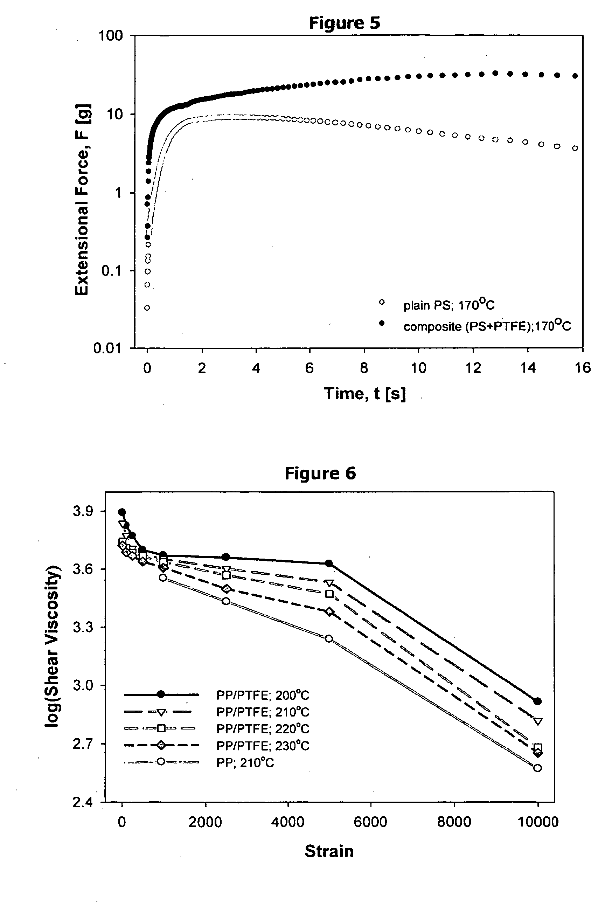

Melt strength of composite was measured by uniaxial stretching using rheometer ARES 2KFRTN1 with Elongational Viscosity Fixture. Uniaxial stretching was performed at the temperature 170°C with deformation rate 0.1 s⁻¹. Plots of stretching force against time are presented in Figure 5.

The results indicate that the presence of nanofibers of poly(tetrafluoroethylene) increases three-folds the strength of composite as compared to plain atactic polystyrene.

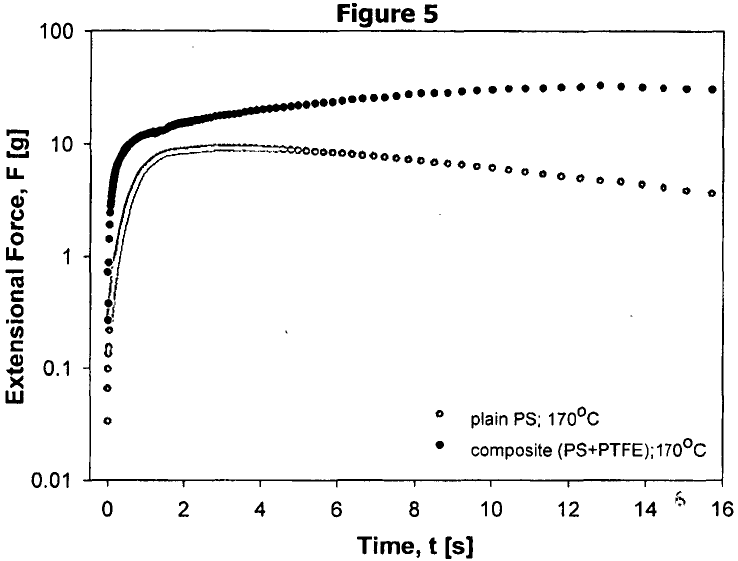

### Example VI.

For production of a composite polypropylene Malen-P B200 having density 0.91g/cm³, melt flow index 0.6g/10min (2.16kg, 230°C), by Basell Orlen Polyolefins Sp. z o.o. Plock, Poland, was used. Also a poly(tetrafluoroethylene) powder Teflon PTFE 7C by DuPont, USA, having average particle size 28µm was used. Poly(tetrafluoroethylene) powder was finely ground in a homogenizer at liquid nitrogen temperature and then added to molten polypropylene in the amount sufficient to assure 5 wt% of poly(tetrafluoroethylene) in a composite. Poly(tetrafluoroethylene) particles were premixed with polypropylene at temperature 200°C. Plain polypropylene Malen-P B200 was also subjected to the same treatment in order to obtain polypropylene sample with similar thermal history as polypropylene/ poly(tetrafluoroethylene) composite. 1 mm thick films of the blend and of polypropylene were compression molded at 200°C. Molten samples were subjected to shearing with the rate 4 s⁻¹ until the requested deformation was achieved. The shearing was applied to samples in a rheometer ARES 2KFRTN1 in a plate-plate system. Viscosity was measured during the rheometer runs and the samples for scanning electron microscopy investigation were picked up. The dependence of viscosity against deformation is presented in Figure 6.

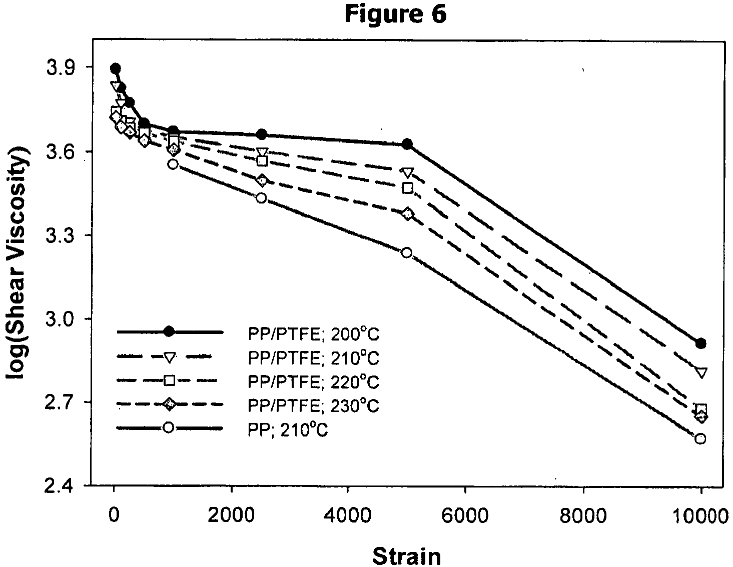

After initial drop of viscosity with increasing deformation the curves are leveling off. As it follows from morphology investigation of collected samples in the range of deformation up to 4000-5000 a strong deformation of poly(tetrafluoroethylene) powder particles and formation of nanofibers occurred. The rate and yield of nanofiber formation is larger for lower temperature. For the temperature range as in Figure 6 and for viscosity range as characteristic of the brand of polypropylene the deformation above 5000 results in a drop of viscosity accompanied by nanofiber orientation and their occasional fracture. Such observations are confirmed by scanning electron microscopy examination. BPP/4275/CH5/2010

## Claims

1. All-polymer fibrillar nanocomposites **characterized in that** they consist of a thermoplastic polymer from the group of polyolefins, and polystyrenes, eventually with known additives, and poly(tetrafluoroethylene) having crystallinity degree above 50 wt.% and melting temperature of 330°C or higher, in the form of individual nanofibers forming neither bundles nor agglomerates, with transversal sizes ranging from 10 to 500 nm, added in a content ranging from 3 wt.% to 15wt.%.

2. Method of modification of properties of a thermoplastic polymer or a composition containing of a thermoplastic polymer **characterized in that** that to a thermoplastic polymer from the group of polyolefins, polystyrenes, eventually containing known additives, prior its processing poly(tetrafluoroethylene) having crystallinity above 50wt.% and melting temperature 330°C or higher in the form of powder with particles of sizes in the range from 100 nm to 2 mm is added in the amount ranging from 3 wt% to 15wt.% and the composition obtained in this way is mixed at temperature higher than the softening temperature of the thermoplastic polymer, subjecting the composition during mixing to shearing forces, preferably at high shear rates, until transformation of poly(tetrafluoroethylene) into individual fibers forming neither bundles nor agglomerates, with transversal sizes ranging from 10 to 500 nm after which, eventually, the obtained nanocomposite is processed by extrusion, injection molding, thermoforming or foaming.

3. Method according to the Claim 2 **characterized in that** that poly(tetrafluoroethylene) powder is added to a thermoplastic polymer or to a composition containing a thermoplastic polymer with known additives prior to mixing with additives, during mixing with additives or after mixing with additives.

4. Method according to the Claim 2 **characterized in that** that poly(tetrafluoroethylene) powder is initially ground prior to addition to a thermoplastic polymer or a composition containing a thermoplastic polymer.

5. Method according to the Claim 2 characteristic in that that as an additive another thermoplastic polymer is used.

6. Method according to the Claim 2 characteristic in that that an additive a chemical compound with low molecular weight is used, selected from a group consisting of pigments, stabilizers, antioxidants and fire retardant.

7. Method according to the Claim 2 characteristic in that that as an additive a particulate filler or a fibrous filler is used.

8. Method according to the Claim 2 characteristic in that that to a thermoplastic polymer or to a composition containing a thermoplastic polymer with known additives poly(tetrafluoroethylene) particles in the form of powder or in the form of a dispersion in a liquid are added.

9. Method according to the Claim 2 characteristic in that that poly(tetrafluoroethylene) particles are coated with a substance preventing them from agglomeration.

10. Method according to the Claim 2 characteristic in that that a surface of poly(tetrafluoroethylene) particles is chemically modified to prevent them from agglomeration.

11. Method according to the Claim 2 or the Claim 9 characteristic in that that a dispersion of poly(tetrafluoroethylene) powder contains a surfactant stabilizing the dispersion.

12. Method according to the Claim 2 characteristic in that that mixing is conducted by means of a co-rotating twin screw extruder.

13. Method according to the Claim 2 characteristic in that that poly(tetrafluoroethylene) particles are added to a polymer melt.

14. Method according to the Claim 2 characteristic in that that the modified thermoplastic polymer or composition containing thermoplastic polymer after mixing is granulated.

15. Method according to the Claim 2 characteristic in that that the modified thermoplastic polymer or composition containing thermoplastic polymer is processed by injection molding, extrusion thermoforming and foaming.

## Patentansprüche

1. All-Polymer-Nanoverbundwerkstoffe fibrillären **dadurch gekennzeichnet, daß** sie aus einem thermoplastischen Polymer aus der Gruppe der Polyolefine und Polyester, schließlich mit bekannten Additiven, und Poly (tetrafluorethylen) Kristallinitätsgrad über 50 Gew.% Und Schmelztemperatur bestehen 330°C oder höher, in Form von einzelnen Nanofasern bilden weder Bündel noch Agglomerate mit transversalen Größen im Bereich von 10 bis 500 nm, zugegeben in einer Menge von 3 Gew.% Bis 15 Gew.%.

2. Verfahren zur Modifizierung der Eigenschaften eines thermoplastischen Polymers oder einer Zusammensetzung, die aus einem thermoplastischen Polymer, **dadurch gekennzeichnet, dass** eine thermoplastische Polymer aus der Gruppe der Polyolefine, Polystyrole, schließlich bekannte Zusätze enthalten , vor ihrer Verarbeitung Poly (tetrafluorethylen) mit einer Kristallinität über 50 Gew.% und Schmelztemperatur 330°C oder in Form von Pulver mit Teilchen von Größen in dem Bereich von 100 nm bis 2 mm höher in einer Menge von 3 Gew.% auf 15 Gew.% und die auf diese Weise erhaltenen Zusammensetzung hinzugefügt bei einer Temperatur höher als die Erweichungstemperatur des thermoplastischen Polymers, Unterziehen der Zusammensetzung während des Mischens zu Scherkräften , vorzugsweise bei hohen Schergeschwindigkeiten, bis Transformation von Poly (tetrafluorethylen) in einzelne Fasern, die weder Agglomerate noch Bündel mit Quergrößengemischt 10 bis 500 nm nach dem schließlich das erhaltene Nanokomposit durch Extrusion , Spritzgießen, Thermoformen oder Schäumen verarbeitet.

3. Verfahren nach dem Anspruch 2, **dadurch gekennzeichnet, daß** das Poly (tetrafluorethylen)-Pulver mit einem thermoplastischen Polymer oder eine Zusammensetzung, die ein thermoplastisches Polymer mit bekannten Additiven vor dem Mischen mit Additiven, beim Mischen mit Additiven oder nach dem Mischen mit Additiven versetzt.

4. Verfahren nach dem Anspruch 2, **dadurch gekennzeichnet, daß** das Poly(tetrafluorethylen)-Pulver wird zunächst vor der Zugabe zu einem thermoplastischen Polymer oder einer Zusammensetzung, die ein thermoplastisches Polymer gemahlen.

5. Verfahren nach dem Anspruch 2, dadurch charakterisiert, daß das als Additiv ein anderes thermoplastisches Polymer verwendet wird.

6. Verfahren nach dem Anspruch 2, dadurch charakterisiert, daß ein Additiv, das eine chemische Verbindung mit niedrigem Molekulargewicht verwendet wird, ausgewählt aus einer Gruppe bestehend aus Pigmenten, Stabilisatoren, Antioxidationsmittel und Flammschutzmittel.

7. Verfahren nach dem Anspruch 2, dadurch charakterisiert, daß das als Zusatzstoff einen teilchenförmigen Füllstoff oder ein faserförmiger Füllstoff verwendet wird.

8. Verfahren nach dem Anspruch 2, dadurch charakterisiert, daß die auf ein thermoplastisches Polymer oder eine Zusammensetzung, die ein thermoplastisches Polymer mit bekannten Additiven Poly(tetrafluorethylen)-Teilchen in Form von Pulver oder in Form einer Dispersion in einer Flüssigkeit zugegeben.

9. Verfahren nach dem Anspruch 2, dadurch charakterisiert, daß das Poly(tetrafluorethylen)-Teilchen mit einer Substanz aus Agglomeration verhindern, dass sie beschichtet.

10. Verfahren nach dem Anspruch 2, dadurch charakterisiert, daß die eine Oberfläche des Poly(tetrafluorethylen)-Teilchen chemisch modifiziert ist, um sie von Agglomeration zu verhindern.

11. Verfahren nach dem Anspruch 2 oder dem Anspruch 9, dadurch charakterisiert, daß das eine Dispersion von Poly(tetrafluorethylen)-Pulver ein Tensid Stabilisierung der Dispersion.

12. Verfahren nach dem Anspruch 2, dadurch charakterisiert, daß das Mischen mit Hilfe eines gleichsinnig drehenden Doppelschneckenextruder durchgeführt.

13. Verfahren nach dem Anspruch 2, dadurch charakterisiert, daß das Poly(tetrafluorethylen) sind Teilchen zu einer Polymerschmelze gegeben.

14. Verfahren nach dem Anspruch 2, dadurch charakterisiert, daß das das modifizierte thermoplastisches Polymer oder thermoplastischen Polymerzusammensetzung , die nach dem Mischen granuliert.

15. Verfahren nach dem Anspruch 2, dadurch charakterisiert, daß die das modifizierte thermoplastische Polymer oder eine Zusammensetzung enthaltend thermoplastische Polymer durch Spritzgießen, Extrusion, Thermoformen und Schäumen verarbeitet.

## Revendications

1. All-polymères nanocomposites fibrillaires **caractérisés en ce qu'**ils sont constitués d'un polymère thermoplastique du groupe des polyoléfines, et les polystyrènes, éventuellement avec des additifs connus, et le poly(tétrafluoroéthylène) ayant un degré de cristallinité supérieur à 50 en poids.% Et la température de fusion de 330°C ou ultérieure, sous la forme de nanofibres individuelles formant ni faisceaux, ni d'agglomérats avec des tailles transversales allant de 10 à 500 nm, ajoutés en une teneur allant de 3 wt.% à 15 wt.%.

2. Procédé de modification des propriétés d'un polymère thermoplastique ou une composition contenant un polymère thermoplastique **caractérisé en ce que** que pour un polymère thermoplastique du groupe des polyoléfines, des polystyrènes, contenant éventuellement des additifs connus, avant son poly de traitement (tétrafluoroéthylène) ayant une cristallinité ci-dessus 50wt.% et une température de fusion plus élevée 330°C ou sous forme de poudre avec des particules de tailles dans la gamme de 100 nm à 2 mm est ajouté en une quantité allant de 3% en poids à 15 wt.% Et la composition ainsi obtenue est mélange à température supérieure à la température de ramollissement du polymère thermoplastique, la soumission de la composition pendant le mélange à des forces de cisaillement, de préférence à des vitesses de cisaillement élevées, jusqu'à ce que la transformation du poly(tétrafluoroéthylène) sous forme de fibres individuelles formant ni faisceaux, ni d'agglomérats, ayant des dimensions transversales allant de 10 à 500 nm, après quoi, finalement, le nanocomposite obtenu est traité par extrusion, moulage par injection, thermoformage ou moussage.

3. Procédé selon la revendication 2, **caractérisé en ce que** que le poly(tétrafluoroéthylène), la poudre est ajoutée à un polymère thermoplastique ou d' une composition contenant un polymère thermoplastique avec des additifs connus avant le mélange avec les additifs, pendant le mélange avec des additifs ou après mélange avec des additifs.

4. Procédé selon la revendication 2, **caractérisé en ce que** que le poly(tétrafluoroéthylène) est d'abord broyé en poudre avant l'addition à un polymère thermoplastique ou une composition contenant un polymère thermoplastique.

5. Procédé selon la revendication 2, **caractérise en ce que** ce que, comme additif d'un autre polymère thermoplastique est utilisé.

6. Procédé selon la revendication 2, **caractérise en ce que** qu'un additif, un composé chimique de faible poids moléculaire est utilisé, choisi parmi un groupe constitué de pigments, des stabilisants, des antioxydants et des ignifuges.

7. Procédé selon la revendication 2, **caractérise en ce que** ce que comme additif une charge particulaire ou une charge fibreuse est utilisée.

8. Procédé selon la revendication 2, **caractérise en ce que** que pour un polymère thermoplastique ou d' une composition contenant un polymère thermoplastique avec des additifs connus de poly(tétrafluoroéthylène) les particules sous forme de poudre ou sous la forme d' une dispersion dans un liquide sont ajoutés.

9. Procédé selon la revendication 2, **caractérise en ce que** ce poly(tétrafluoroéthylène) les particules sont revêtues d'une substance qui les empêche de l'agglomération.

10. Procédé selon la revendication 2, **caractérise en ce que** qu'une surface de poly(tétrafluoroéthylène) des particules est modifiée chimiquement pour les empêcher d'agglomération.

11. Procédé selon la revendication 2 ou la revendication 9, **caractérise en ce que** qu 'une dispersion de poly(tétrafluoroéthylène) de poudre contient un agent tensioactif stabilisant la dispersion.

12. Procédé selon la revendication 2, **caractérise en ce que** ce mélange est effectué au moyen d'une co- extrudeuse à deux vis tournant.

13. Procédé selon la revendication 2, **caractérise en ce que** ce poly(tétrafluoroéthylène), les particules sont ajoutés à une masse fondue de polymère.

14. Procédé selon la revendication 2, **caractérise en ce que** ce que le polymère thermoplastique modifié ou d'une composition contenant un polymère thermoplastique après le mélange est granulé.

15. Procédé selon la revendication 2, **caractérise en ce que** ce que le polymère thermoplastique modifié ou d'une composition contenant un polymère thermoplastique est traité par moulage par injection, l'extrusion, le thermoformage et le moussage.
